# DEMANDE DE BREVET EUROPEEN

(11) **EP 2 048 069 A1**
(43) Date de publication de la demande: **15.04.2009**
(21) Numéro de dépôt: 08165865.0
(22) Date de dépôt: 03.10.2008
(51) Int. Cl.: B62J 11/00

(54) **Sac de protection et de rangement de léquipement d'un motard**

(30) Priorité: 11.10.2007 FR 0758239
(71) Demandeur: Pellerin, Jean-Philippe, 78200 Magnanville (FR)
(72) Inventeur: Pellerin, Jean-Philippe, 78200 Magnanville (FR)
(74) Mandataire: Chaillot, Geneviève

(57) **Abrégé**

La présente invention a pour objet un sac de protection et de rangement (1) destiné à venir s'adapter sur une moto (9) ou véhicule similaire, ledit sac (1) étant constitué par un réceptacle (2) présentant une ouverture apte à être fermée par un panneau de fermeture (3), caractérisé par le fait qu'au moins un orifice (3a, 3b) est pratiqué dans le réceptacle (2) et/ou le panneau de fermeture (3) permettant le passage d'au moins un antivol (13) de type câble ou chaîne destiné à être enfilé dans une zone ouverte d'au moins un objet rangé dans le sac (1) tel qu'un casque (10a, 10b) ou un blouson, les extrémités libres (13a, 13b) dudit antivol (13) qui comportent des moyens de verrouillage étant destinés à coopérer avec des moyens complémentaires de verrouillage (14) installés sur la moto ou véhicule similaire.

## Description

La présente invention porte sur les systèmes de protection de l'équipement d'un motard, et plus particulièrement sur un sac de protection et de rangement protégeant de manière antivol l'équipement d'un motard.

Les pilotes de moto ou de véhicules similaires (type quadricycles) et leurs passagers utilisent des équipements spécifiques de sécurité composés, en général, d'un casque, d'un blouson renforcé et de gants renforcés pour les protéger en cas de chute, le port du casque étant rendu obligatoire par la loi.

Lors du stationnement de la moto ou de véhicule similaire dans un lieu public, l'équipement, et plus particulièrement le casque, ne sont plus utiles. Le motard a alors plusieurs possibilités pour disposer de son casque, telles que :
1. le mettre dans un coffre fixé sur le porte-bagages (« top-case ») si la moto en est équipée ;
2. le mettre dans une sacoche classique si la moto en est équipée ;
3. poser le casque sur la selle et fixer la jugulaire à un système antivol si la moto en est équipée ;
4. fixer simplement le casque à la moto par un antivol de type câble ou chaîne ; ou
5. l'emmener avec lui.

Les deux premières solutions sont pratiques, car elles permettent au motard de ne pas s'encombrer de son casque. Cependant, cela nécessite que la moto soit équipée de systèmes de rangement type « top-case » ou sacoches classiques, qui présentent l'inconvénient d'être coûteux, de dénaturer l'esthétique et la ligne de la moto et d'être susceptibles de provoquer des troubles aérodynamiques en roulage.

Les solutions 3 et 4 sont pratiques, puisque le motard n'a pas besoin de s'encombrer de son casque, mais avec ces deux solutions, les casques sont exposés aux intempéries, au rayonnement solaire et aux chocs accidentels, ce qui n'est pas souhaitable pour un équipement de sécurité. Ceci est vrai en particulier pour les casques en matière plastique composite, susceptibles de se dégrader rapidement sous l'action des intempéries, du rayonnement solaire et des chocs.

Ces inconvénients poussent souvent le motard à adopter la dernière possibilité. Le motard se retrouve alors encombré de son casque pendant son activité.

La présente invention vise à remédier aux inconvénients des solutions précédentes, en proposant une solution permettant au motard de fixer son équipement de manière antivol à sa moto, sans dénaturer l'esthétique de la moto ou son aérodynamisme, et en protégeant l'équipement des chocs accidentels, des intempéries et du rayonnement solaire.

La présente invention a donc pour objet un sac de protection et de rangement destiné à venir s'adapter sur une moto ou véhicule similaire, ledit sac étant constitué par un réceptacle présentant une ouverture de remplissage apte à être fermée par un panneau de fermeture, caractérisé par le fait qu'au moins un orifice est pratiqué dans le panneau de fermeture, permettant le passage d'au moins un antivol de type câble ou chaîne destiné à être enfilé dans une zone ouverte d'au moins un objet rangé dans le sac tel qu'un casque ou un blouson, les extrémités libres dudit antivol qui comportent des moyens de verrouillage étant destinés à coopérer avec des moyens complémentaires de verrouillage installés sur la moto ou véhicule similaire, le panneau de fermeture comportant le ou les orifices, rabattu et fixé au réceptacle, étant destiné à être posé sur la selle de la moto en position d'utilisation du sac.

Le réceptacle et le panneau de fermeture peuvent être fermés, par exemple, au moyen d'une fermeture à glissière ou au moyen d'une fermeture auto-agrippante, type velours et crochet.

Le réceptacle peut comporter intérieurement au moins une cloison de séparation formant des compartiments de rangement, la au moins une cloison précitée comportant au moins un orifice pour le passage du ou des antivols de type câble ou chaîne.

La cloison peut être, notamment, cousue ou collée sur la paroi interne du réceptacle.

Le sac peut porter extérieurement au moins une sangle, avantageusement de longueur réglable, qui est attachée au sac par l'une de ses extrémités, le cas échéant détachable, et dont l'extrémité libre porte un moyen de fixation complémentaire d'un moyen porté par la moto ou véhicule similaire afin de fixer le sac de façon stable sur celle-ci ou celui-ci, lesdites sangles étant notamment des sangles à crochets élastiques ou à crochets réglables.

Le sac peut porter au moins deux sangles, avantageusement de longueurs réglables, disposées de chaque côté du sac, les extrémités libres desdites sangles étant aptes à s'attacher de part et d'autre de la moto et/ou à coopérer entre elles pour une fixation des sangles autour du dosseret de selle ou partie analogue de la moto pour assurer une fixation stable du sac sur la moto.

Les deux sangles précitées peuvent aussi être une seule sangle, dont une partie est cousue sur le rabat de fermeture du sac, laissant de chaque côté du sac deux parties de sangles de fonctionnalité identique aux deux sangles précitées.

Le sac peut porter au moins une sangle, avantageusement de longueur réglable, reliée au sac sur chacun des deux côtés de celui-ci afin de pouvoir être glissée sur le dosseret de selle ou élément analogue de la moto pour assurer une fixation stable du sac sur la moto.

Une partie de la sangle peut être cousue sur le rabat de fermeture du sac.

Le sac peut comporter en outre au moins deux sangles aptes à venir se glisser autour du dosseret de selle et/ou à venir s'attacher par une extrémité sur un côté de la moto et sur une autre extrémité de l'autre côté de la moto, le réceptacle du sac portant deux organes de fixation par sangle précitée, organes de fixation dont les compléments sont portés par ladite sangle de telle sorte que le sac peut être rempli alors qu'il est fixé sur la moto dans une position basculée sur un côté du fait que deux organes de fixation placés du même côté sur le sac coopèrent avec leurs compléments sur les sangles respectives, alors que les deux autres organes de fixation placés sur l'autre côté du sac ne sont pas encore amenés à coopérer avec leurs compléments.

La fixation des organes de fixations peut être, notamment, une fixation par velours et crochet.

Le panneau de fermeture peut être constitué par un rabat apte à venir se fermer sur l'ouverture du réceptacle.

Le sac peut être fait en un matériau souple, étanche et opaque.

Le sac peut être apte à être enfermé dans une housse avantageusement solidaire ou pouvant être rendue solidaire d'une ceinture de portage, par exemple dans un sac banane.

La ceinture de portage peut constituer ou porter une sangle de fixation, en particulier une sangle de fixation telle que définie ci-dessus.

Le sac peut être fait en un matériau souple lui permettant, lorsqu'il n'est pas utilisé, d'être plié sur lui-même pour former un conditionnement plat.

Le conditionnement plat peut par exemple être une sacoche.

Le sac peut porter des moyens permettant de maintenir le conditionnement plat dans un état fermé, par exemple des bandes auto-agrippantes de type à velours et crochets ou des fermetures à glissière, portés par le rabat et le réceptacle.

Une sangle portant des moyens de fixation peut être prévue sur le côté externe du panneau de fermeture en vue d'une fixation sur la moto du conditionnement plat formé par le sac replié sur lui-même lorsqu'il n'est pas utilisé.

Ainsi, cette sangle peut être fixée autour de la selle de la moto pour une fixation du conditionnement plat formé par le sac sur la moto. La sangle, ou une autre partie du conditionnement plat peut également porter des moyens de fixation sur le cadre de la moto, par exemple sur les cale-pieds.

La présente invention a également pour objet un dispositif destiné à être supporté par une moto ou un véhicule similaire pour le rangement d'objets tels que casques, blouson, et pour la protection de manière antivol d'au moins une partie de ces objets, caractérisé par le fait qu'il comprend :
- un sac tel que défini ci-dessus ;
- au moins un antivol de type câble ou chaîne destiné à être enfilé dans une zone ouverte d'au moins un objet rangé dans le sac, les extrémités libres dudit antivol comportant des moyens de verrouillage tels que des boucles destinés à coopérer avec des moyens complémentaires de verrouillage installés sur la moto ou le véhicule similaire, lesdits moyens de verrouillage complémentaires étant constitués par l'antivol de la moto ou du véhicule similaire de type câble, chaîne ou cadenas en U, et/ou par des moyens de verrouillage rapportés, tels que des cadenas ; et
- le cas échéant, des moyens de verrouillage rapportés tels que des cadenas.

Le sac de protection et de rangement de l'équipement d'un motard fermé, peut notamment être posé sur la selle, panneau de fermeture ou rabat côté selle, et fixé à la moto lorsque la moto est en stationnement, à l'aide d'un câble antivol fixé à l'antivol de la moto ou à un cadenas spécifique, ledit sac étant en matériau souple, étanche et opaque.

La présente invention a également pour objet un système de protection de l'équipement d'un motard, composé notamment d'un sac de protection tel que défini précédemment, d'un câble antivol et d'un cadenas.

Lorsque l'utilisateur circule sur sa moto, le système peut notamment venir se ranger aux endroits suivants :
- dans le compartiment aménagé sous la selle de la moto lorsqu'il existe ;
- sur la coque arrière de la moto, fixé à l'aide d'une sangle fournie avec le système ;
- dans le sac à dos du pilote ;
- dans une sacoche classique lorsque la moto en est équipée ;
- dans un sac banane (housse solidaire d'une ceinture de portage) porté à la ceinture du pilote ; ou
- dans le sac de réservoir lorsque la moto en est équipé.

Le système peut se composer notamment de trois éléments :
- un sac en matériau souple présentant une ou plusieurs des caractéristiques suivantes :

- étanche pour protéger des intempéries ;
- opaque pour protéger du rayonnement solaire ;
- cloisonné en deux parties pour recevoir un casque et un blouson ou deux casques ;
- présentant un panneau d'ouverture/fermeture sur le dessous venant se positionner directement sur la selle de la moto ;
- présentant une fixation de chaque côté de la moto par sangles élastiques ou sangles réglables pour assurer la stabilité du sac sur la moto ;
- présentant, dans le mode de réalisation pour un seul objet, un orifice dans le panneau de fermeture, dans le mode de réalisation pour deux objets avec cloison, trois orifices, deux dans le panneau de fermeture, un orifice étant pratiqué pour chacun des compartiments formés dans le sac par la cloison, et un dans la cloison de séparation, et dans le mode de réalisation pour deux objets sans cloison, au moins un orifice dans le panneau de fermeture, permettant le passage d'un câble antivol.
- un câble antivol souple en acier présentant une boucle de chaque côté ;
- un cadenas de sécurité.

Il existe deux situations de vie pour le système.

Dans le mode antivol, le sac est utilisé pour contenir de façon antivol l'équipement de motard, le sac étant fixé de façon stable à la moto par des sangles et de façon antivol à la moto par un câble à boucles.

Dans le mode rangé, plusieurs possibilités sont offertes.

Le sac peut, par exemple, être plié et rangé avec le câble dans le compartiment sous la selle de la moto.

Le système complet peut aussi être rangé dans un sac de transport livré avec le système. Ce sac de transport peut comporter une ceinture de portage et le pilote le porte à sa ceinture lorsqu'il conduit sa moto.

Le sac de transport peut encore être fixé par sa sangle sur le dosseret de la moto lorsque le pilote conduit.

Le sac peut enfin être rangé dans un sac à dos livré avec le système, que le pilote met sur son dos lorsqu'il conduit la moto.

Le sac peut comporter un seul objet, par exemple un casque ou un blouson, ou peut comporter deux objets, par exemple deux casques, deux blousons, ou un casque et un blouson.

Lorsque le sac comporte deux objets, par exemple deux casques, ceux-ci sont disposés côte à côte dans le sens longitudinal du réceptacle, afin qu'en position d'utilisation du sac, les deux casques puissent reposer sur la selle.

Dans la position d'utilisation du sac, le casque peut être fixé de manière antivol à la moto par un câble à boucles fixé par au moins une extrémité à la moto, et peut être inséré dans le sac, une extrémité du câble antivol sortant du ou des orifices formés dans le panneau de fermeture, le panneau de fermeture étant rabattu et fixé au réceptacle, par exemple au moyen d'une fermeture à glissière, et le sac peut être destiné à être posé sur la selle de la moto, le panneau de fermeture reposant sur la selle de la moto.

Ainsi, étant donné qu'aucun orifice et qu'aucune ouverture du réceptacle n'est directement exposée aux intempéries, le moyen de fixation du panneau de fermeture sur le réceptacle et le ou les orifices étant sur la selle de moto, on assure une étanchéité pour les objets à l'intérieur du sac.

De part la disposition du ou des orifices dans le panneau de fermeture, la structure du sac et la disposition du sac, avec le panneau de fermeture, rabattu et fixé au réceptacle, posé sur la selle en position d'utilisation, on assure à la fois une étanchéité pour les objets présents dans le sac, aucune humidité ne pouvant rentrer directement dans le sac, et une sécurisation des objets dans le sac à la moto, un câble antivol pouvant relier et sécuriser des objets à l'intérieur du sac à la moto, sans générer dans le sac une ouverture exposant l'intérieur du sac aux intempéries.

Le sac peut alors être fixé à la moto au moyen de sangles, se fixant sur les cale-pieds de la moto et/ou sur le cadre de la moto.

Afin de mieux illustrer l'objet de la présente invention, on va maintenant en décrire des modes de réalisation particuliers, en référence aux dessins annexés.

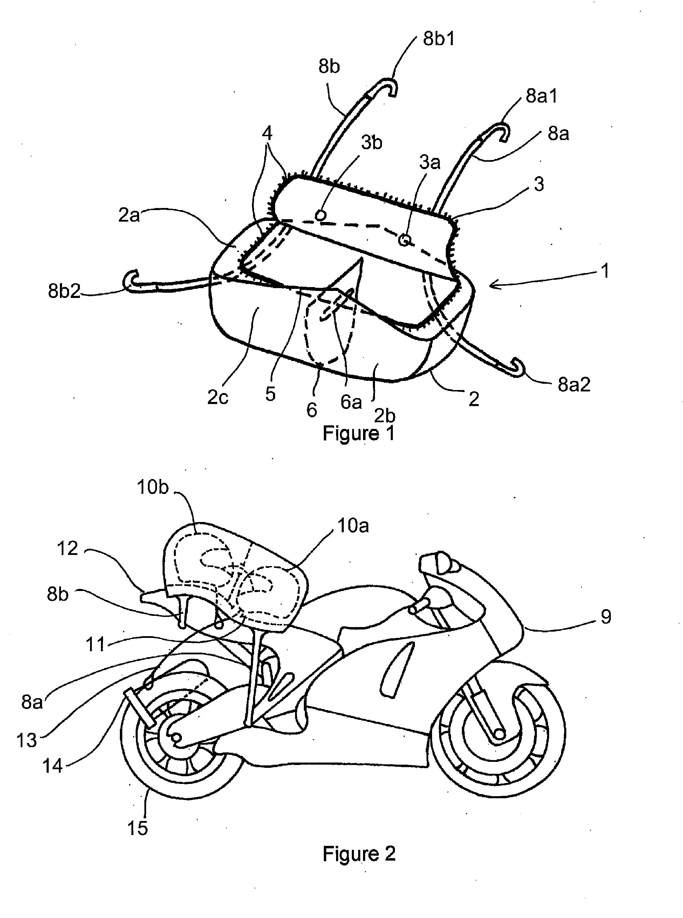

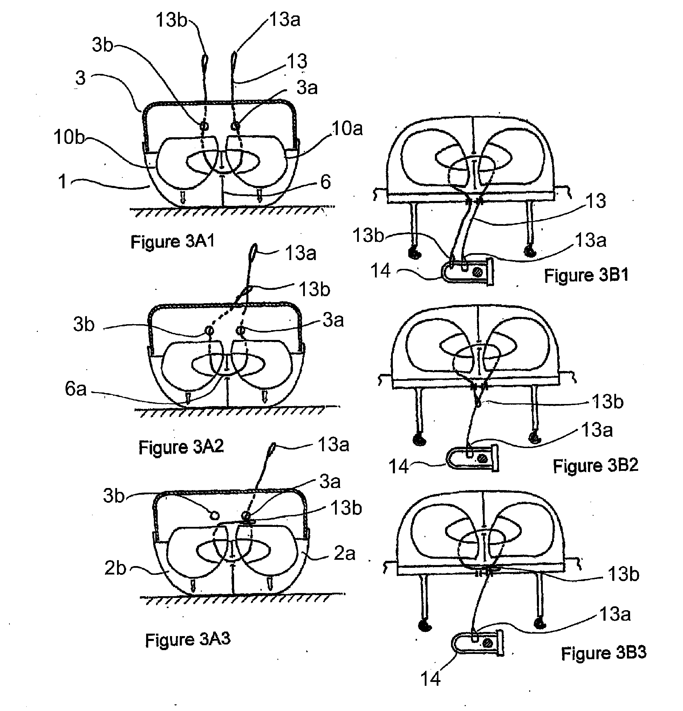

Sur ces dessins :
- la Figure 1 est une représentation schématique d'un sac de protection et de rangement selon un premier mode de réalisation de l'invention, montrant la structure du sac;
- la Figure 2 est une représentation schématique du sac de la Figure 1, en position d'utilisation sur une moto avec un câble antivol et un cadenas ;
- les Figures 3A1 et 3B1, 3A2 et 3B2, 3A3 et 3B3 représentent respectivement trois méthodes différentes pour fixer ensemble le sac de la Figure 1, son contenu, le câble antivol et le cadenas ;
- les Figures 4A1 et 4B1, 4A2 et 4B2, 4A3 et 4B3 sont des figures respectivement analogues aux Figures 3A1 et 3B1, 3A2 et 3B2, 3A3 et 3B3, pour un sac selon un deuxième mode de réalisation de l'invention ;
- les Figures 5A1 et 5B1, 5A2 et 5B2 sont des figures respectivement analogues aux Figures 3A2 et 3B2, 3A3 et 3B3, pour un sac selon un troisième mode de réalisation de l'invention ;
- la Figure 6 représente un sac selon un quatrième mode de réalisation de l'invention ;
- la Figure 7 représente un dispositif de fixation utilisé avec le sac de la Figure 6 ;
- la Figure 8 représente une sangle utilisé pour fixer le sac de la Figure 6 à la moto ;
- la Figure 9 représente un sac banane dans lequel le sac de la Figure 6 est rangé ;
- la Figure 10 représente un câble à boucles utilisé avec le sac de la Figure 6 ;
- les Figures 11A à 11K représentent schématiquement une séquence d'installation sur une moto d'un sac selon un quatrième mode de réalisation de l'invention ; et
- la Figure 12 est une vue de face du sac selon un cinquième mode de réalisation de l'invention, dans lequel le sac est replié sur lui-même selon une forme de sacoche ;
- la Figure 13 est une vue arrière du sac de la Figure 12 ;
- la Figure 14 est une vue de dessus du sac de la Figure 12, dans une étape intermédiaire de dépliage du sac ;
- la Figure 15 est une vue de dessous du sac de la Figure 12, dans une étape intermédiaire de dépliage du sac, ultérieure à celle de la Figure 14 ; et
- la Figure 16 est une vue en perspective du sac déplié.
   Si l'on se réfère à la Figure 1, on peut voir un sac de protection et de rangement 1 selon un premier mode de réalisation de l'invention.
   Le sac 1 comporte un réceptacle 2 en matière souple, ledit réceptacle présentant sur une face une ouverture de remplissage sensiblement rectangulaire comportant un rebord périphérique 2a. Ladite ouverture de remplissage peut être fermée au moyen d'un rabat de fermeture 3 de forme sensiblement rectangulaire, ledit rabat de fermeture 3 constituant un prolongement du réceptacle 2 sur un de ses côtés, et venant se fixer sur ses trois autres côtés sur le rebord périphérique 2a de l'ouverture de remplissage au moyen d'une fermeture à glissière 4.
   Une jupe 5 formée en bordure de la face du réceptacle 2 présentant une ouverture protège la fermeture à glissière 4 des intempéries.
   Le réceptacle 2 est séparé en deux compartiments 2b, 2c par une cloison 6 fixée sur la surface interne du réceptacle 2, chaque compartiment pouvant comprendre un équipement de motard, comme par exemple un casque (non représenté).
   Le rabat de fermeture 3 comprend en outre deux orifices 3a, 3b situés respectivement de façon centrée au-dessus de chaque compartiment 2b, 2c, lorsque le rabat de fermeture 3 est rabattu sur le réceptacle 2.
   Un troisième orifice 6a est formé de façon centrale sur la cloison 6, faisant communiquer les deux compartiments 2b, 2c.
   Une sangle avant 8a et une sangle arrière 8b, parallèles, sont cousues transversalement sur une largeur de la surface externe du rabat de fermeture 3, des crochets de fixation 8a1, 8a2, 8b1, 8b2 étant disposées aux deux extrémités de chaque sangle.
   Si l'on se réfère maintenant à la Figure 2, on peut voir le sac de la Figure 1 en position d'utilisation sur une moto 9, le sac contenant deux casques 10a, 10b.
   Le rabat de fermeture 3 du sac 1, rabattu et fixé au réceptacle 2 par la fermeture à glissière 4, est posé sur la selle 11 de la moto 9.
   La sangle avant 8a est fixée par les crochets de fixation 8a1 et 8a2 aux cale-pieds du pilote de la moto (non représentés) de la moto 9, tandis que la sangle arrière 8b est fixée au dosseret de selle 12 de la moto, les deux crochets 8b1 et 8b2 de la sangle arrière 8b étant fixés ensemble pour maintenir la sangle arrière 8b autour du dosseret de selle 12.
   Un câble antivol 13 à boucles est amené à passer à travers les orifices 3a, 3b et 6a formés respectivement dans le rabat de fermeture 3 et la cloison 6, et à travers les casques 10a, 10b, pour fixer le sac 1 et son contenu à un cadenas 14, fixé sur la roue arrière 15 de la moto 9.
   Pour la description des Figures 3A1 à 5B2, on supposera que le sac (1 ; 101 ; 201) étant posé retourné sur une selle de moto ou toute autre surface horizontale, deux casques 10a, 10b sont introduits chacun dans un des compartiments (2a, 2b ; 102a, 102b ; 202a, 202b) du sac (1 ; 101 ; 201), ouverture cou du casque vers le haut et les visières des casques 10a, 10b étant en vis à vis, les visières faisant face à l'orifice (6a ; 106a ; 206a) formé dans la cloison interne (6 ; 106 ; 206) du sac (1 ; 101 ; 201).
   Un câble antivol 13 à boucles est amené à passer à travers le premier casque 10a (ouverture cou puis visière), à travers l'orifice (6a ; 106a ; 206a) formé dans la cloison interne (6 ; 106 ; 206) du sac (1 ; 101 ; 201), puis à travers le deuxième casque 10b (visière puis ouverture cou).
   Si l'on se réfère maintenant aux Figures 3A1 et 3B1, 3A2 et 3B2, 3A3 et 3B3, on peut voir qu'on a représenté schématiquement trois méthodes différentes pour fixer le sac 1, les casques 10a, 10b, le câble antivol 13 à boucles et le cadenas 14, pour le premier mode de réalisation du sac des Figures 1 et 2.
- Figures 3A1 et 3B1 : dans cette première méthode, chaque extrémité du câble antivol 13 à boucles est amenée à passer à travers les orifices 3a, 3b du rabat de fermeture 3, chacune des extrémités 13a, 13b du câble à boucle étant ensuite fixée sur le cadenas 14.
- Figures 3A2 et 3B2 : dans cette deuxième méthode, chaque extrémité du câble antivol 13 à boucles est amenée à passer à travers les orifices 3a, 3b du rabat de fermeture 3. L'une des extrémités 13a du câble antivol 13 à boucles est ensuite amenée à passer dans la boucle de l'autre extrémité 13b du câble antivol 13 à boucles, seule l'extrémité 13a du câble antivol 13 à boucles étant alors fixée sur le cadenas 14.
- Figures 3A3 et 3B3 : dans cette troisième méthode, l'une des extrémités 13a du câble antivol 13 à boucles est amenée à passer dans la boucle de l'autre extrémité 13b du câble antivol 13 à boucles. Seule l'extrémité 13a du câble antivol 13 à boucles est alors amenée à passer à travers un des orifices 3a, 3b du rabat de fermeture 3 pour être ensuite fixée sur le cadenas 14.

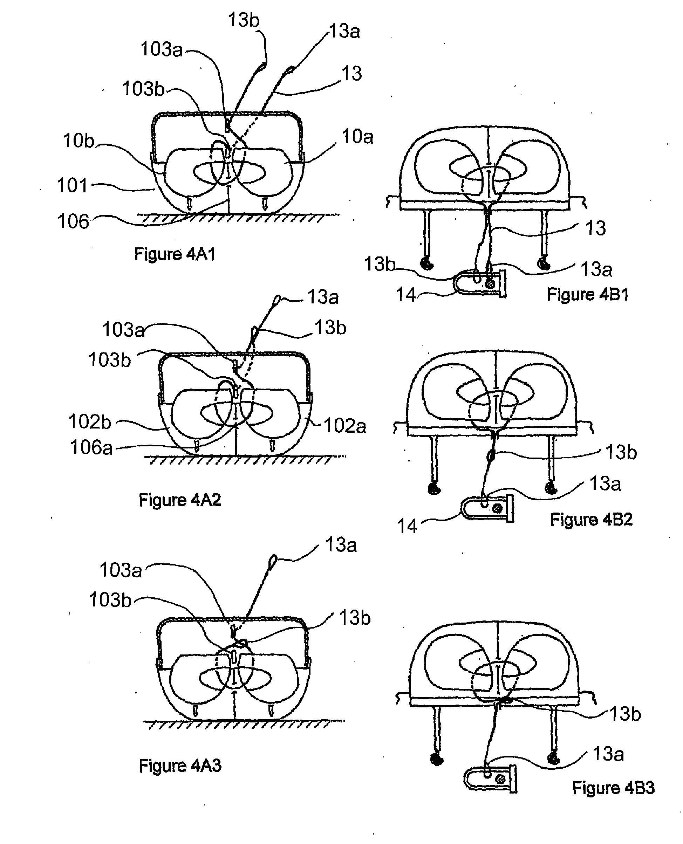

Si l'on se réfère maintenant aux Figures 4A1 et 4B1, 4A2 et 4B2, 4A3 et 4B3, on peut voir qu'on a représenté schématiquement trois méthodes différentes pour fixer le sac 101, les casques 10a, 10b, le câble antivol 13 à boucles et le cadenas 14, pour un deuxième mode de réalisation du sac selon l'invention.

Dans ce deuxième mode de réalisation du sac 101 selon l'invention, les orifices 103a, 103b du rabat de fermeture 103 sont disposés dans le sens de la largeur du rabat de fermeture 103, au-dessus de la cloison 106.
- Figures 4A1 et 4B1 : dans cette première méthode, chaque extrémité du câble antivol 13 à boucles est amenée à passer à travers les orifices 103a, 103b du rabat de fermeture 103, chacune des extrémités 13a, 13b du câble à boucle étant ensuite fixée sur le cadenas 14.
- Figures 4A2 et 4B2 : dans cette deuxième méthode, chaque extrémité du câble antivol 13 à boucles est amenée à passer à travers les orifices 103a, 103b du rabat de fermeture 103. L'une des extrémités 13a du câble antivol 13 à boucles est ensuite amenée à passer dans la boucle de l'autre extrémité 13b du câble antivol 13 à boucles, seule l'extrémité 13a du câble antivol 13 à boucles étant alors fixée sur le cadenas 14.
- Figures 4A3 et 4B3 : dans cette troisième méthode, l'une des extrémités 13a du câble antivol 13 à boucles est amenée à passer dans la boucle de l'autre extrémité 13b du câble antivol 13 à boucles. Seule l'extrémité 13a du câble antivol 13 à boucles est alors amenée à passer à travers un des orifices 103a, 103b du rabat de fermeture 3 pour être ensuite fixée sur le cadenas 14.

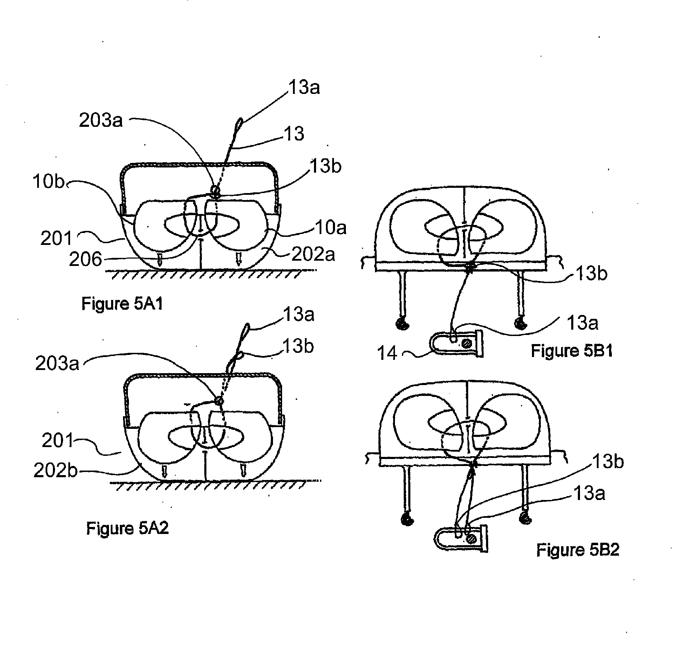

Si l'on se réfère maintenant aux Figures 5A1 et 5B1, 5A2 et 5B2, 5A3 et 5B3, on peut voir qu'on a représenté schématiquement trois méthodes différentes pour fixer le sac 201, les casques 10a, 10b, le câble antivol 13 à boucles et le cadenas 14, pour un troisième mode de réalisation du sac selon l'invention.

Dans ce troisième mode de réalisation du sac 201 selon l'invention, un seul orifice 203a est formé sur le rabat de fermeture 203 au-dessus de l'un ou l'autre des compartiments 202a, 202b.
- Figures 5A1 et 5B1 : dans cette première méthode, l'une des extrémités 13a du câble antivol 13 à boucles est ensuite amenée à passer dans la boucle de l'autre extrémité 13b du câble antivol 13 à boucles, seule l'extrémité 13a du câble antivol 13 à boucles étant alors amenée à passer à travers l'orifice 203a du rabat de fermeture 203 pour être ensuite fixée sur le cadenas 14.
- Figures 5A2 et 5B2 : dans cette deuxième méthode, les deux extrémités 13a, 13b du câble antivol 13 à boucles sont amenées à passer à travers l'orifice 203a du rabat de fermeture 203, chacune des extrémités 13a, 13b du câble à boucle étant ensuite fixée sur le cadenas 14.

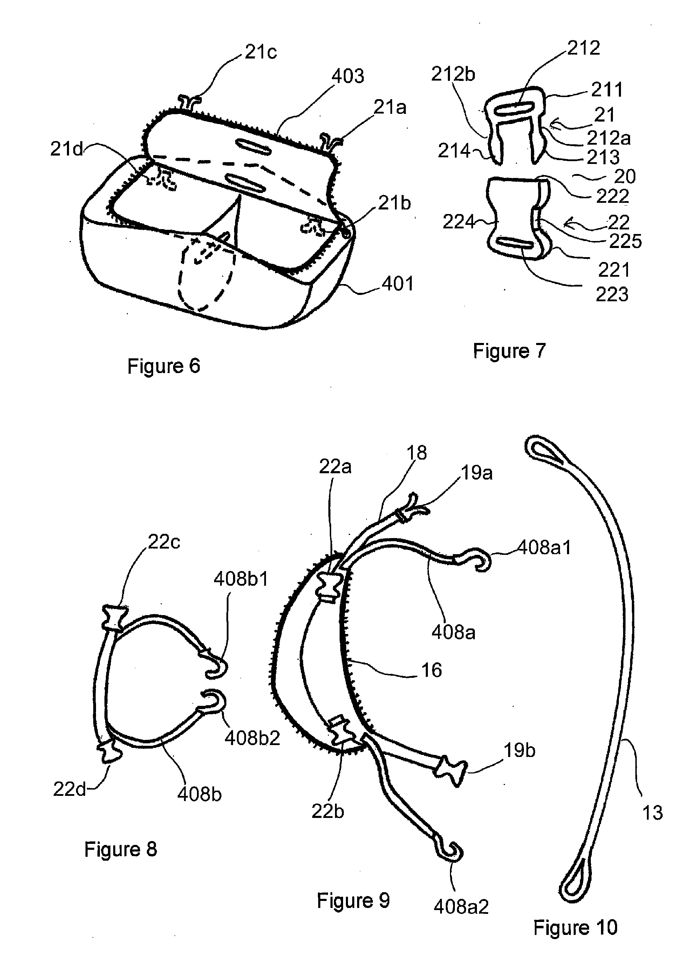

On va maintenant décrire un quatrième mode de réalisation préféré de l'invention, en référence aux Figures 6 à 11K.

Dans ce mode de réalisation, le sac 401 est détachable de la sangle avant 408a au moyen de deux éléments de fixation détachables 20a et 20b, et de la sangle arrière 408b au moyen de deux éléments de fixation détachables 20c et 20d.

Chaque élément de fixation 20a, 20b, 20c, 20d, décrit plus en détail ci-dessous en référence à la Figure 7, comprend deux parties complémentaires, respectivement 21a, 22a ; 21b, 22b ; 21c, 22c ; 21d, 22d, les parties 21a et 21b étant cousues sur le sac 401 sur les bords du rabat de fermeture 403 du sac 401, au niveau de l'extrémité avant du rabat de fermeture 403, et les parties 22a et 22b étant cousues sur la surface supérieure de la sangle avant 408a, les deux éléments de fixation détachables 22a et 22b étant écartés sur la sangle avant 408a d'une distance égale à la largeur du sac 401 ; et les parties 21c et 21d étant cousues sur le sac 401 sur les bords du rabat de fermeture 403 du sac 401, au niveau de l'extrémité arrière du rabat de fermeture 403, et les parties 22c et 22d étant cousues sur la surface supérieure de la sangle arrière 408b, les deux éléments de fixation détachables 22c et 22d étant écartés sur la sangle arrière 408b d'une distance égale à la largeur du sac 401

Un tel élément de fixation détachable 20, utilisé dans ce mode de réalisation, est représenté sur la Figure 7, et comprend deux parties complémentaires 21 et 22, qui s'emboîtent l'une dans l'autre et se fixent ensuite par encliquetage.

La première partie 21 est une pièce plate, qui présente une partie d'extrémité de forme parallélépipédique 211, à travers laquelle un trou traversant longitudinal 212 est formé, afin de pouvoir coudre cette pièce au rabat de fermeture 403 du sac 401. Deux ergots 212a et 212b font saillie à partir d'un côté de la partie d'extrémité 211, chaque ergot 212a, 212b présentant à son extrémité un bossage, respectivement 213 et 214, tous deux orientés vers l'extérieur de la pièce 21.

La deuxième partie 22 est une pièce creuse, présentant une ouverture 222 à l'une de ses extrémités, et dont l'autre extrémité 221 présente un trou traversant longitudinal 223, afin de pouvoir coudre cette pièce sur une des sangles 408a ou 408b.

La pièce 22 comporte latéralement des trous 224 et 225, avec lesquels les bossages 213 et 214 de la pièce complémentaire 21 coopèrent pour emboîter les deux pièces 21 et 22 par encliquetage.

Comme on peut le voir sur la Figure 8, la sangle arrière 408b porte, dans ce mode de réalisation, des organes de fixation 22c et 22d, complémentaires des moyens de fixation 21c et 21d portés par le rabat de fermeture 403 du sac 401. Des crochets, 408b1 et 408b2 sont prévus à chaque extrémité de la sangle 408b pour fixer la sangle 408b sur la moto.

On peut le voir sur la Figure 9, un sac banane 16 destiné à contenir le sac 401 selon le quatrième mode de réalisation, ainsi que la sangle arrière 408b, le câble antivol 13 et le cas échéant le cadenas 14. La sangle avant 408a est portée par le sac banane 16, la sangle avant 408a étant cousue sur la ceinture de portage 18 du sac banane 16. La sangle avant 408a porte, dans ce mode de réalisation, des organes de fixation 22a et 22b, complémentaires des moyens de fixation 21a et 21b portés par le rabat de fermeture 403 du sac 401. Des crochets, 408a1 et 408a2 sont prévus à chaque extrémité de la sangle 408a pour fixer la sangle 408a sur la moto.

La ceinture de portage 18 comporte à chaque extrémité des organes de fixation 19a et 19b, formant un dispositif de fixation analogue au dispositif de fixation décrit en référence à la Figure 7.

La Figure 10 illustre un câble à boucle 13, utilisé dans ce mode de réalisation.

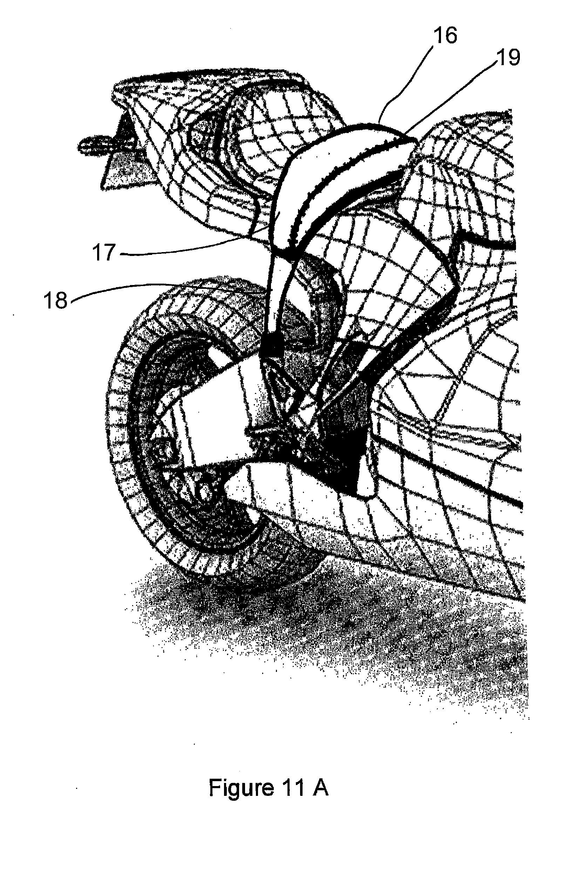

On va maintenant décrire le procédé d'installation du sac selon le quatrième mode de réalisation, en référence aux Figures 11A à 11K, qui montrent le procédé d'installation du sac de protection et de rangement 401 sur la moto 9.

Dans ce quatrième mode de réalisation, le sac 401 est replié sous la forme d'un sac banane 16, comme représenté sur la Figure 11A.

Le sac banane 16 comprend une housse 17, une ceinture de portage 18, la housse 17 et la ceinture de portage 18 étant cousues ensemble.

La housse 17 comporte sur sa surface externe dans le sens de la longueur une fermeture à glissière 19 pour permettre l'ouverture de la housse 17.

Dans la première étape de montage représentée sur la Figure 11A, le sac banane fermé est posé sur la selle de la moto, les extrémités de la ceinture de portage 18 pendant de chaque côté de la moto.

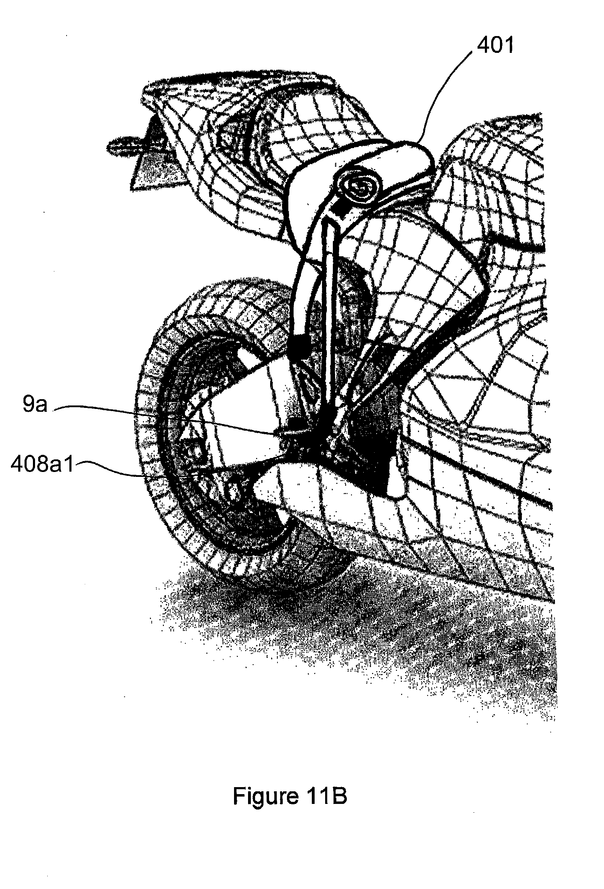

Si l'on se réfère maintenant à la Figure 11B, on peut voir, à une échelle agrandie, que dans la deuxième étape du procédé d'installation, la housse 17 du sac banane 16 ouverte, et les crochets 408a1, de la sangle 408a avant sont attachés aux cale-pieds du pilote 9a de la moto.

La housse 17 enveloppe le sac de protection et de rangement 401, enroulé sur lui-même, ainsi que la sangle arrière 408b, le câble antivol 13 et le cas échéant le cadenas 14.

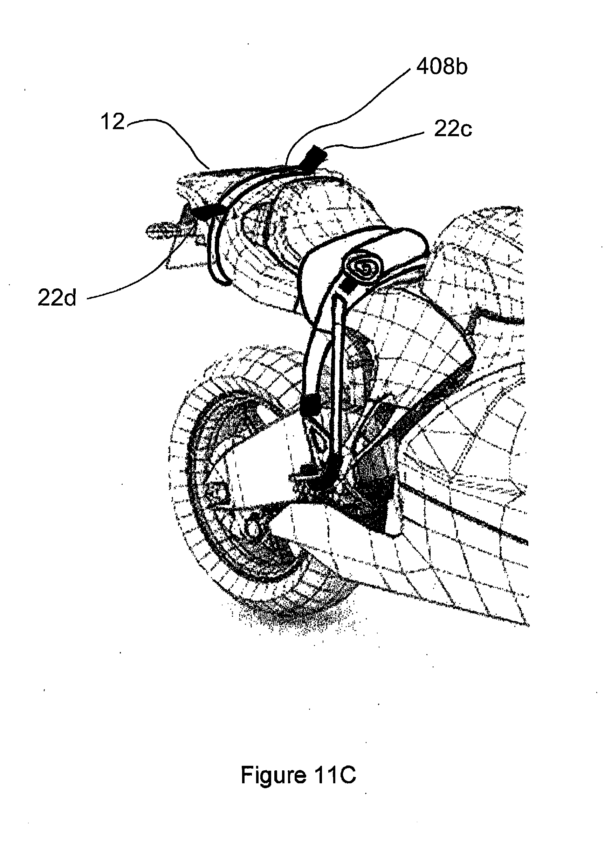

Si l'on se réfère maintenant à la Figure 11C, on peut voir que la sangle arrière 408b est fixée au dosseret de selle 12 de la moto par fixation des deux crochets 408b1 et 408b2 ensemble pour maintenir la sangle arrière 408b autour du dosseret de selle 12, les dispositifs de fixation 22c et 22d ne coopérant pas encore avec leur compléments sur le sac 401, 21c et 21d.

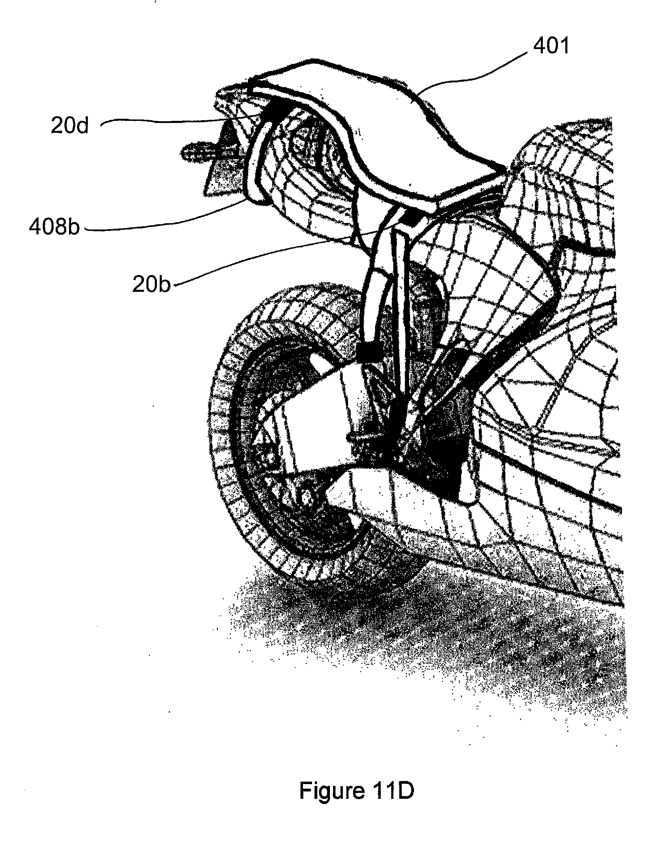

Si l'on se réfère maintenant à la Figure 11D, on peut voir que le sac 401 a été déroulé sur la selle 11 de moto 9. Les dispositifs 22d et 21d et les dispositifs 22b et 21b étant amenés à coopérer pour fixer le sac 401 sur un côté de la moto sur les sangles 408b et 408a, respectivement.

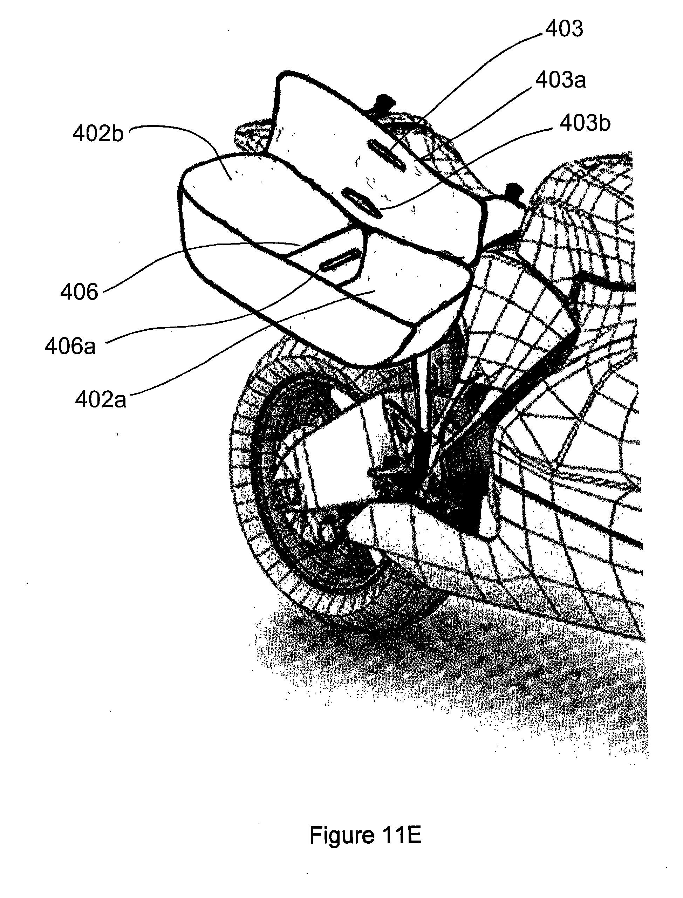

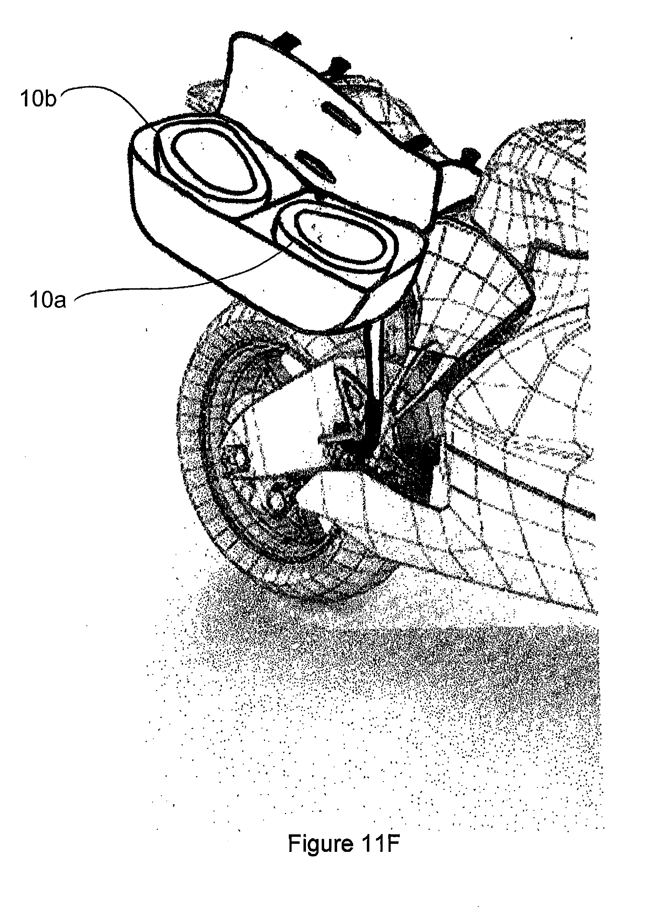

Comme on peut le voir sur la Figure 11E, le sac 401 étant non lié sur un côté des sangles avant 408a et arrière 408b par non coopération des éléments de fixation détachables 22a et 22c et 21a et 21c. Le rabat de fermeture 403 est alors ouvert pour apposer des casques 10a et 10b dans chaque compartiment 402a et 402b du sac 401, les casques 10a et 10b étant disposés de façon analogue aux Figures 3A1 à 5A2, comme on peut le voir sur la Figure 11F.

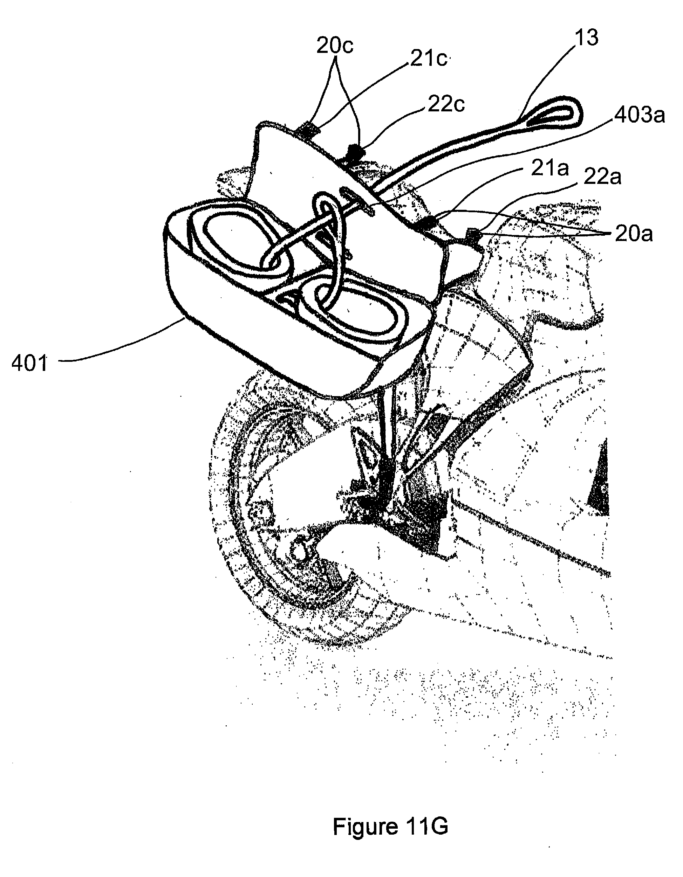

Le câble antivol à boucles 13 est alors fixé aux casques 10a et 10b et au sac d'une façon analogue à celle décrite dans les Figures 5A1 et 5A2 en passant par l'orifice 403a, comme cela est représenté sur la Figure 11G.

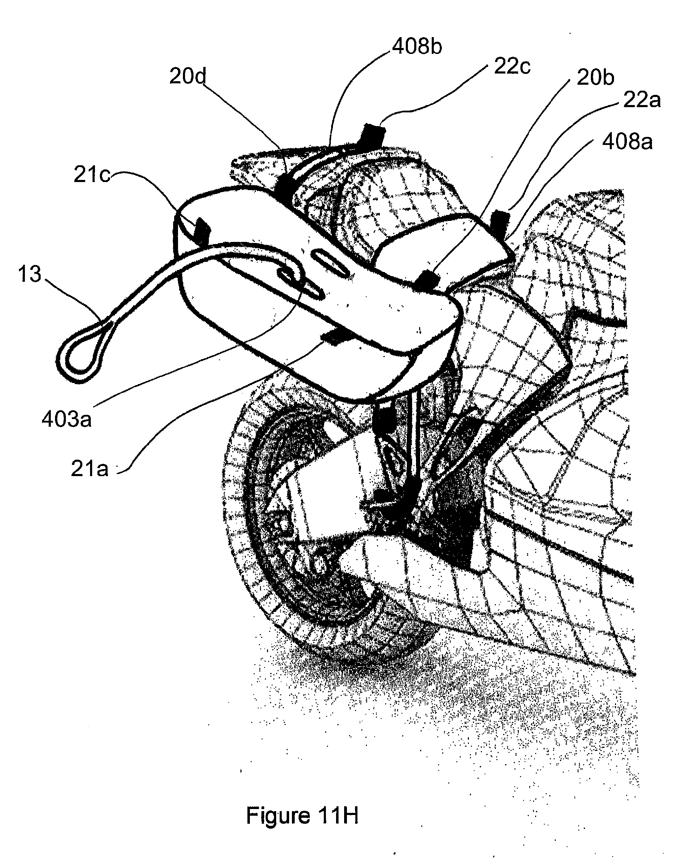

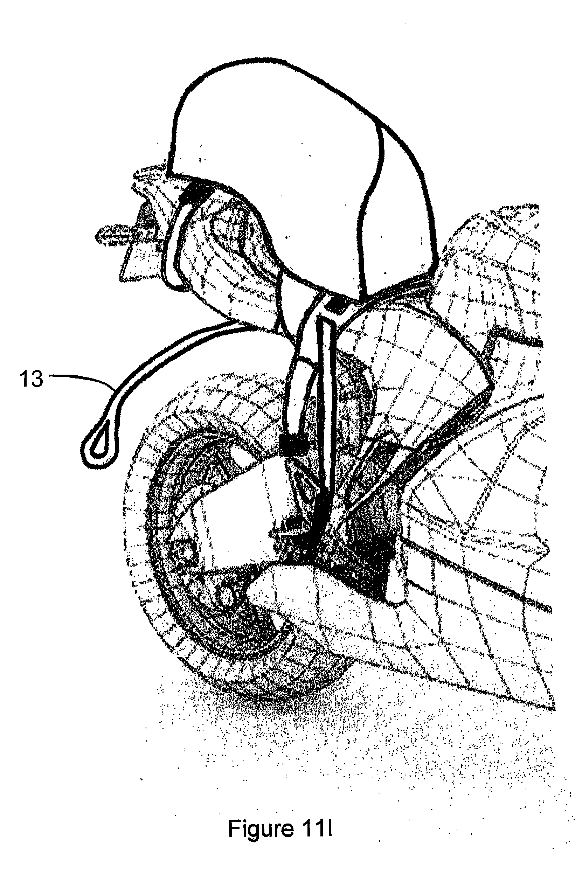

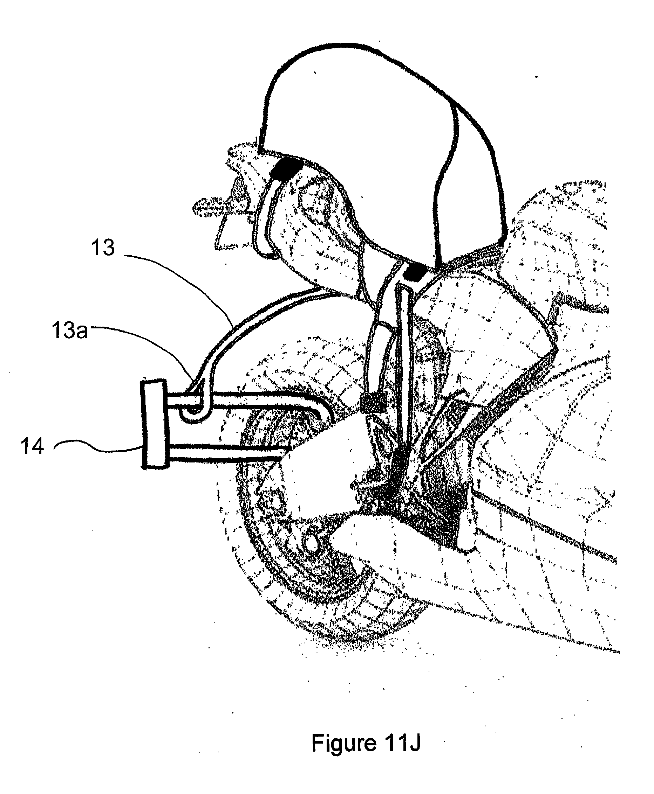

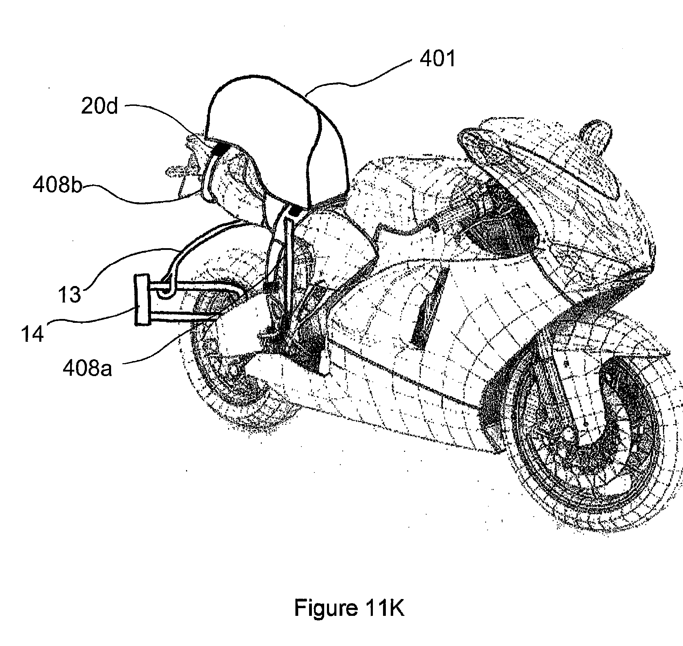

Le rabat de fermeture 403 est alors refermé par la fermeture à glissière (Figure 11H), puis le sac 401 est fixé à nouveau sur les sangles avant 408a et arrière 408b par l'intermédiaire des éléments de fixation détachables 22a et 22c (Figure 11I). Le câble antivol 13 à boucles est enfin fixé par l'une de ses extrémités 13a au cadenas 14 (Figure 11J et 11K).

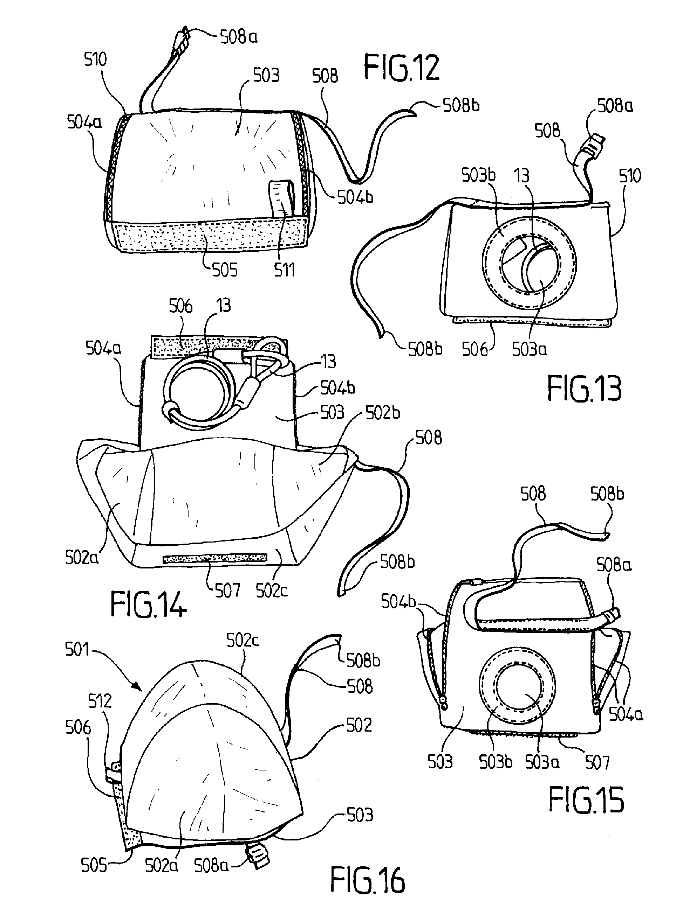

Si l'on se réfère aux Figures 12 à 16, on peut voir qu'il y est représenté un sac selon un cinquième mode de réalisation, dans lequel le sac peut être replié selon la forme d'une sacoche.

Selon ce cinquième mode de réalisation, le sac 501 est en matière souple et contient un objet, par exemple un casque.

Le sac 501 comporte un réceptacle 502 présentant une ouverture rectangulaire, ledit réceptacle étant constitué de deux panneaux latéraux 502a et 502b, tous deux de forme semi-circulaire, les deux panneaux latéraux 502a et 502b étant assemblés le long de leurs bords arrondis par un panneau central 502c.

Un panneau de fermeture rectangulaire 503, de même largeur que l'ouverture du réceptacle 502, mais de longueur supérieure, est cousu par un de ses petits côtés à une extrémité du panneau central 502c.

Deux fermetures à glissière 504a et 504b, sur les grands côtés du panneau de fermeture 503 et sur les bords droits deux panneaux latéraux 502a et 502b permettent de fermer l'ouverture du réceptacle 502 le long des bords droits des deux panneaux latéraux 502a et 502b.

Une bande auto-agrippante 505, de type velours et crochets, située sur la face externe du petit côté libre du panneau de fermeture 503, coopère avec une bande auto-agrippante correspondante (non représentée) située dans le réceptacle, à l'extrémité libre du panneau central 502c pour fermer totalement l'ouverture du réceptacle 502.

Des pattes en tissus 511 et 512 sont prévues en bordure des bandes auto-agrippantes précitées pour aider l'utilisateur à séparer ces deux bandes, lorsque le sac est totalement fermé, et ainsi ouvrir le sac 501.

Un orifice circulaire 503a pour le passage d'un câble antivol 13 à l'extérieur du réceptacle fermé est formé dans le panneau de fermeture 503, à l'extrémité du panneau de fermeture 503 cousue au panneau central 502c du réceptacle 502. Une pièce de couture 503b, en forme d'anneau avec un évidement central correspondant à la dimension de l'orifice circulaire 503a est cousue autour de l'orifice circulaire 503a pour renforcer le tissu du panneau de fermeture autour de l'orifice circulaire 503a.

Une sangle 508 est cousue au niveau de sa partie centrale sur le côté extérieur du panneau de fermeture 503, transversalement, sensiblement au milieu du panneau de fermeture 503, ladite sangle 508 ayant à une extrémité un organe de fixation 508a, coopérant avec l'extrémité libre 508b de la sangle 508 pour une fermeture de la sangle 508.

Dans l'état replié en sacoche 510 du sac 501 représenté sur la Figure 12, une deuxième bande auto-agrippante 506, situé à l'extrémité libre du panneau de fermeture 503, du côté interne du panneau de fermeture 503, coopère avec une bande auto-agrippante 507 située sur le côté extérieur du réceptacle, à l'extrémité du panneau central 503c sur laquelle est cousue une extrémité du panneau de fermeture, pour former la sacoche 510.

Lorsque le sac 501 est ouvert, sans objet à l'intérieur, le rabat 503 étant complètement ouvert, on peut replier le sac 501 en la sacoche 510.

Pour cela, on plie une première fois sur lui-même le réceptacle 502, la pliure étant effectuée de manière transversale au réceptacle 502 et passant approximativement par le milieu des trois panneaux 502a, 502b et 502c du réceptacle 502, de telle sorte que le panneau central 502c est replié en deux sur lui-même vers l'intérieur du réceptacle, les deux extrémités du panneau central 502c se touchant, les deux panneaux latéraux 502a, 502b étant également pliés en deux sur eux-mêmes et faisant saillie vers l'extérieur du réceptacle 502.

On replie ensuite le réceptacle sur lui-même, de façon à ramener le sommet plié du panneau central 502c sur les extrémités du panneau central 502c à l'intérieur du réceptacle (Figure 15).

On peut aussi ramener, dans une variante de pliage, le sommet plié du panneau central 502c sur la bande autoagrippante 507, comme représenté sur la Figure 14.

On remonte alors les fermetures à glissière 504a et 504b jusqu'au bord de pliage des panneaux latéraux, respectivement 502a, 502b.

Les panneaux latéraux 502a, 502b forment alors des saillies vers l'extérieur du réceptacle 502, que l'on replie vers l'intérieur du réceptacle 502, dans la dernière étape de pliage du sac 501.

La sacoche 510 est alors refermée par coopération des bandes auto-agrippantes 506 et 507.

Avant de fermer la sacoche 510 comme indiqué ci-dessus, le câble antivol 13, replié sur lui-même comme représenté sur la Figure 14, peut être glissé dans la sacoche, entre le panneau de fermeture 503 et le panneau central 502c replié.

La sacoche 510, constituée du sac 501 replié, avec le câble antivol à l'intérieur, peut être alors être fixée sur la moto lorsque le conducteur la conduit, soit en fixant la sangle 508 autour de la selle, soit avec des fixations analogues à celles des Figures 11A à 11K, se fixant sur les cale-pieds de la moto.

Dans ce mode de réalisation, lorsque plusieurs objets, par exemple deux casques, sont disposés à l'intérieur du sac, ceux-ci sont disposés côte à côte dans le sens de la longueur du panneau de fermeture 503, d'une manière analogue à celle décrite en référence aux Figures 5A1 à 5B2.

## Revendications

1. - Sac (1 ; 101 ; 201 ; 401 ; 501) de protection et de rangement destiné à venir s'adapter sur une moto (9) ou véhicule similaire, ledit sac (1 ; 101 ; 201 ; 401 ; 501) étant constitué par un réceptacle (2 ; 102 ; 202 ; 402 ; 502) présentant une ouverture de remplissage apte à être fermée par un panneau de fermeture (3 ; 103 ; 203 ; 403 ; 503), **caractérisé par le fait qu'**au moins un orifice (3a, 3b ; 103a, 103b ; 203a, 203b ; 403a, 403b ; 503a) est pratiqué dans le panneau de fermeture (3 ; 103 ; 203 ; 403 ; 503), permettant le passage d'au moins un antivol (13) de type câble ou chaîne destiné à être enfilé dans une zone ouverte d'au moins un objet rangé dans le sac (1 ; 101 ; 201 ; 401 ; 501) tel qu'un casque (10a, 10b) ou un blouson, les extrémités libres (13a, 13b) dudit antivol (13) qui comportent des moyens de verrouillage étant destinés à coopérer avec des moyens complémentaires de verrouillage (14) installés sur la moto ou véhicule similaire, le panneau de fermeture (3 ; 103 ; 203 ; 403 ; 503) comportant le ou les orifices (3a, 3b ; 103a, 103b ; 203a, 203b ; 403a, 403b ; 503a) , rabattu et fixé au réceptacle (2 ; 102 ; 202 ; 402 ; 502), étant destiné à être posé sur la selle de la moto en position d'utilisation du sac (1 ; 101 ; 201 ; 401 ; 501).

2. - Sac (1 ; 101 ; 201 ; 401) selon la revendication 1, **caractérisé par le fait que** le réceptacle (2 ; 102 ; 202 ; 402) comporte intérieurement au moins une cloison (6 ; 106 ; 206 ; 406) de séparation formant des compartiments (2a, 2b ; 102a, 102b ; 202a, 202b ; 402a, 402b) de rangement, la au moins une cloison (6) précitée comportant au moins un orifice (6a ; 106a ; 206a ; 406a) pour le passage du ou des antivols (13) de type câble ou chaîne.

3. - Sac (1 ; 101 ; 201 ; 401) selon l'une des revendications 1 et 2, **caractérisé par le fait qu'**il porte extérieurement au moins une sangle (8a ; 408a), avantageusement de longueur réglable, qui est attachée au sac par l'une de ses extrémités, le cas échéant détachable, et dont l'extrémité libre (8a1, 8a2 ; 408a1, 408a2) porte un moyen de fixation complémentaire d'un moyen porté par la moto (9) ou véhicule similaire afin de fixer le sac (1 ; 101 ; 201 ; 401) de façon stable sur celle-ci ou celui-ci, lesdites sangles (8a, 8b ; 408a1, 408a2) étant notamment des sangles à crochets élastiques ou à crochets réglables.

4. - Sac (1 ; 101 ; 201 ; 401) selon l'une des revendications 1 à 3, **caractérisé par le fait qu'**il porte au moins deux sangles (8a, 8b ; 408a, 408b), avantageusement de longueurs réglables, disposées de chaque côté du sac (1 ; 101 ; 201 ; 401), les extrémités libres desdites sangles (8a1, 8a2 ; 8b1, 8b2 ; 408a1, 408a2 ; 408b1, 408b2) étant aptes à s'attacher de part et d'autre de la moto (9) et/ou à coopérer entre elles pour une fixation des sangles (8a, 8b ; 408a, 408b) autour du dosseret de selle (12) ou partie analogue de la moto (9) pour assurer une fixation stable du sac (1 ; 101 ; 201 ; 401) sur la moto (9).

5. - Sac (1 ; 101 ; 201 ; 401) selon l'une des revendications 1 à 4, **caractérisé par le fait qu'**il porte au moins une sangle (8b ; 408b), avantageusement de longueur réglable, reliée au sac (1 ; 101 ; 201 ; 401) sur chacun des deux côtés de celui-ci afin de pouvoir être glissée sur le dosseret de selle (12) ou élément analogue de la moto (9) pour assurer une fixation stable du sac (1 ; 101 ; 201 ; 401) sur la moto (9).

6. - Sac (401) selon l'une des revendications 1 à 5, **caractérisé par le fait qu'**il comporte en outre au moins deux sangles (408a, 408b) aptes à venir se glisser autour du dosseret de selle (12) et/ou à venir s'attacher par une extrémité sur un côté de la moto et sur une autre extrémité de l'autre côté de la moto, le réceptacle (402) du sac portant deux organes de fixation (21a, 21b, 21c, 21d) par sangle précitée, organes de fixation dont les compléments (22a, 22b, 22c, 22d) sont portés par ladite sangle (408a, 408b) de telle sorte que le sac (401) peut être rempli alors qu'il est fixé sur la moto (9) dans une position basculée sur un côté du fait que deux organes de fixation (21b, 21d) placés du même côté sur le sac (401) coopèrent avec leurs compléments (22b, 22d) sur les sangles respectives (408a, 408b), alors que les deux autres organes de fixation (21a, 21c) placés sur l'autre côté du sac ne sont pas encore amenés à coopérer avec leurs compléments (22a, 22c).

7. - Sac (1 ; 101 ; 201 ; 401 ; 501) selon l'une des revendications 1 à 6, **caractérisé par le fait que** le panneau de fermeture (3 ; 103 ; 203 ; 403 ; 503) est constitué par un rabat apte à venir se fermer sur l'ouverture du réceptacle (2 ; 102 ; 202 ; 402 ; 502).

8. - Sac (1 ; 101 ; 201 ; 401 ; 501) selon l'une des revendications 1 à 7, **caractérisé par le fait qu'**il est fait en un matériau souple, étanche et opaque.

9. - Sac (401) selon l'une des revendications 1 à 8, **caractérisé par le fait que** le sac (1) est apte à être enfermé dans une housse (17) avantageusement solidaire ou pouvant être rendue solidaire d'une ceinture de portage (18).

10. - Sac (401) selon la revendication 9, **caractérisé par le fait que** la ceinture de portage (18) constitue ou porte une sangle de fixation.

11. - Sac (501) selon l'une des revendications 1, 7 et 8, **caractérisé par le fait qu'**il est fait en un matériau souple lui permettant, lorsqu'il n'est pas utilisé, d'être plié sur lui-même pour former un conditionnement plat (510).

12. - Sac (501) selon la revendication 11, **caractérisé par le fait qu'**il porte des moyens (506, 507) permettant de maintenir le conditionnement plat (510) dans un état fermé.

13. - Sac (501) selon l'une des revendications 11 et 12, **caractérisé par le fait qu'**une sangle (508) portant des moyens de fixation (508a, 508b) est prévue sur le côté externe du panneau de fermeture (503) en vue d'une fixation sur la moto du conditionnement plat (510) formé par le sac (501) replié sur lui-même lorsqu'il n'est pas utilisé.

14. - Dispositif destiné à être supporté par une moto (9) ou un véhicule similaire pour le rangement d'objets tels que casques (10a, 10b), blouson, et pour la protection de manière antivol d'au moins une partie de ces objets, **caractérisé par le fait qu'**il comprend :
- un sac (1 ; 101 ; 201 ; 401 ; 501) tel que défini à l'une des revendications 1 à 13 ;
- au moins un antivol (13) de type câble ou chaîne destiné à être enfilé dans une zone ouverte d'au moins un objet rangé dans le sac (1 ; 101 ; 201 ; 401 ; 501), les extrémités libres dudit antivol (13) comportant des moyens de verrouillage, tels que des boucles, destinés à coopérer avec des moyens complémentaires de verrouillage installés sur la moto (9) ou le véhicule similaire, lesdits moyens de verrouillage complémentaires étant constitués par l'antivol de la moto ou du véhicule similaire de type câble, chaîne ou cadenas en U, et/ou par des moyens de verrouillage rapportés, tels que des cadenas (14) ; et
- le cas échéant, des moyens de verrouillage rapportés (14) tels que des cadenas.
